# EUROPÄISCHE PATENTSCHRIFT

(11) **EP 0 446 683 B1**
(45) Veröffentlichungstag und Bekanntmachung des Hinweises auf die Patenterteilung: **08.12.1993**
(21) Anmeldenummer: 91102518.7
(22) Anmeldetag: 21.02.1991
(51) Int. Cl.: F16L 3/22

(54) **Halterung für eine elektrische Energieleitung in einem Flugzeug**
Device for fastening an electrical lead in an aircraft
Dispositif pour la fixation d'une conduite électrique dans un avion

(30) Priorität: 15.03.1990 DE 4008239
(43) Veröffentlichungstag der Anmeldung: 18.09.1991
(73) Patentinhaber: Deutsche Aerospace Airbus Gesellschaft mit beschränkter Haftung, 21129 Hamburg (DE)
(72) Erfinder: Guthke, Hans-Peter, W-2162 Steinkirchen (DE); Piede, Werner, W-2155 Jork (DE); Soltow, Uwe, W-2000 Hamburg 61 (DE)

(56) Entgegenhaltungen:
- DE-A- 3 445 489
- DE-U- 1 927 665

## Beschreibung

Die Erfindung bezieht sich auf eine Halterung nach dem Oberbegriff des Anspruchs 1.

Einrichtungen dieser Art werden verwendet, um die innerhalb eines Flugzeuges von einem elektrischen Generator zu den Verbrauchern verlegten Energieleitungen zu befestigen. Eine derartige Leitung stellt praktisch eine Drehstromleitung dar, wobei jeder der drei Leiter zur Kühlung in der Regel aus zwei parallel geschalteten, frei hängenden Einzelkabeln besteht. Eine derartige Energieleitung besteht daher Üblicherweise aus sechs Einzelkabeln, die mit Hilfe der Halterung innerhalb der Tragkonstruktion des Kabinenfußbodens und innerhalb des Heckbereiches bzw. innerhalb der Tragflügel zu befestigen sind. Alle innerhalb des Flugzeuges verlegten elektrischen Leitungen bestehen zum Teil aus solchen, die eine gewisse Empfindlichkeit gegen elektromagnetische Störeinstrahlung aufweisen und solchen, die selbst Störstrahlungen aussenden. Zu letzteren gehört die genannte Energieieitung sowie eine sog. Erregerleitung, über die das Feld des elektrischen Generators versorgt und geregelt wird. Diese getrennt von der Energieleitung verlegte und aus einem Kabelbündel von Hin- und Rückleitung bestehende Leitung führt einen Gleichstrom, der mit Schwankungen von unterschiedlichen Frequenzen überlagert ist. Alle elektrischen Leitungen sind unter Beachtung der gegenseitigen Beeinflußbarkeit verlegt. Miteinander verträgliche Leitungen sind daher zu Kabelbündeln zusammengefaßt, die je nach ihrer Empfindlichkeit gegen Störeinstrahlung in unterschiedlichem Abstand zu der besagten Energieleitung bzw. der Erregerleitung angeordnet sind. Infolge der hieraus resultierenden räumlichen Verteilung der Leitungen und aufgrund der unterhalb des Kabinenfußbodens bzw. im Heckbereich und in den Tragflügeln bestehenden sehr ungünstigen Platzverhältnisse, ist die Systemgestaltung sehr erschwert. Eine Halterung, die zur Anordnung der Energieleitung in der vorbeschriebenen Weise dient, ist der DE-C- 34 45 489 zu entnehmen. Diese Schrift zeigt also eine Einrichtung zur Befestigung mehrerer elektrischer Leitungen in einem Flugzeug mit einer Randausnehmungen aufweisenden aus Kunststoff hergestellten Scheibe und einer die Scheibe tragenden Traverse mit einer der Scheibe angepaßten Aufnahme, wobei die Scheibe einteilig hergestellt ist und die Randausnehmungen jeweils durch in Umfangsrichtung verlaufende Laschen derart abgedeckt sind, daß sie die Leitungen durch eine Vorspannung festhalten. Dieser Druckschrift ist jedoch nirgends ein Hinweis zu entnehmen, der zu einer besseren Raumausnutzung innerhalb der Verlegungsroute führen würde.

Demgemäß liegt der Erfindung die Aufgabe zugrunde, eine gattungsgemäße Halterung derart auszubilden, daß damit die elektrischen Leitungen in einem engeren Bereich verlegbar sind.

Diese Aufgabe wird bei einer gattungsgemäßen Halterung durch die kennzeichnenden Merkmale des Patentanspruchs 1 gelöst.

Dabei ist insbesondere von Vorteil, daß der Platzbedarf für die elektrischen Leitungen in der Umgebung der Energieleitung und der Erregerleitung reduziert wird.

Vorteilhafte Weiterbildungen der Erfindung sind in den Unteransprüchen angegeben.

Die Erfindung ist anhand der Zeichnung dargestellt und nachfolgend näher erläutert. Es zeigen
- Fig. 1: eine Ansicht der Halterung,
- Fig. 2: eine Ansicht einer Halbscheibe,
- Fig. 3: die Ansicht III der Halbscheibe nach Fig. 2,
- Fig. 4: die Einzelheit IV nach Fig. 1,
- Fig. 5: den Schnitt V-V nach Fig. 4,
- Fig. 6: eine andere Halterung und
- Fig. 7: den Schnitt VIII-VIII nach Fig. 6.

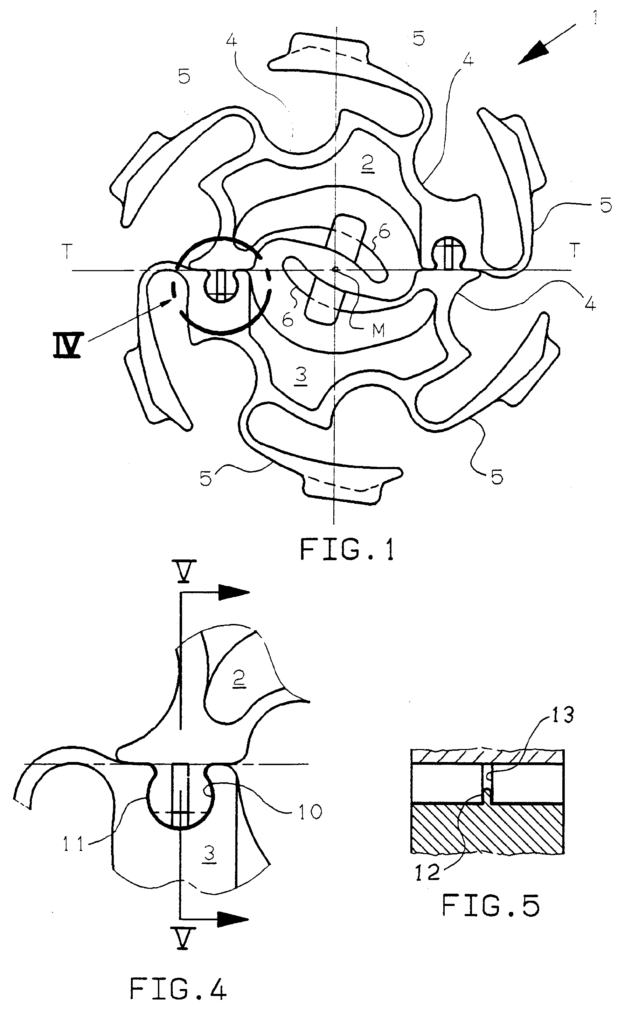

Fig. 1 zeigt eine scheibenförmige Halterung 1, die entlang der durch den Mittelpunkt M verlaufenden Teilungsebene T diametral geteilt ist, so daß zwei Halbscheiben 2 und 3 entstehen. Beide Halbscheiben 2 und 3 sind von identischer Geometrie. Die in geschlossenem Zustand gezeigte Halterung ist mit sechs Randausnehmungen 4 versehen und besteht aus einem thermoplastischen Kunststoff. Die Randausnehmungen 4 sind jeweils durch in Umfangsrichtung verlaufende biegeelastische Laschen 5 abgedeckt. Nahe dem Mittelpunkt M weist jede Halbscheibe 2,3 eine biegeelastisch ausgebildete bogenförmige Schale 6 auf.

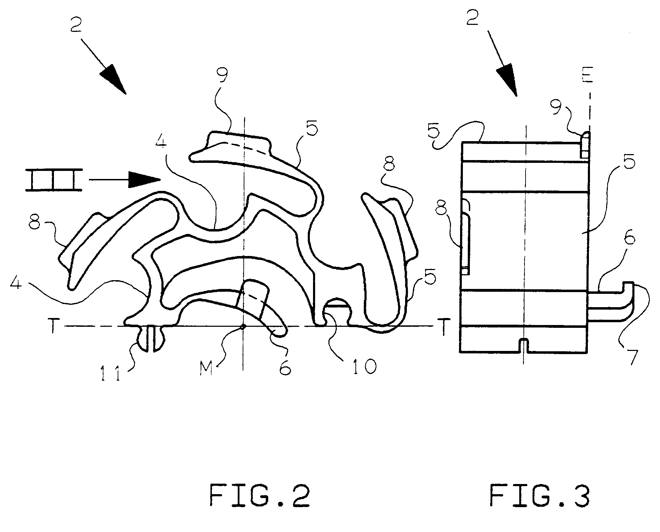

Die Fign. 2 und 3 zeigen nur die in Fig. 1 obere Halbscheibe 2 mit den Randausnehmungen 4, den Laschen 5 und der Schale 6. Diese ragt aus einer Scheibenebene E axial heraus und weist an ihrem der Scheibenebene E abgewandtem Rand eine radial nach außen zeigende Zunge 7 auf. Gemäß Fig. 3 weist jede Lasche 5 entweder auf der nahe der Ebene E gelegenen oder auf der gegenüberliegenden Seite einen nach außen ragenden Wulst 8 bzw. 9 auf. Jede Halbscheibe 2,3 ist jeweils mit einer Nut 10 und einer Feder 11 versehen, die sich mit gleichem Abstand zur Mitte M in der Teilungsebene T gegenüberliegen.

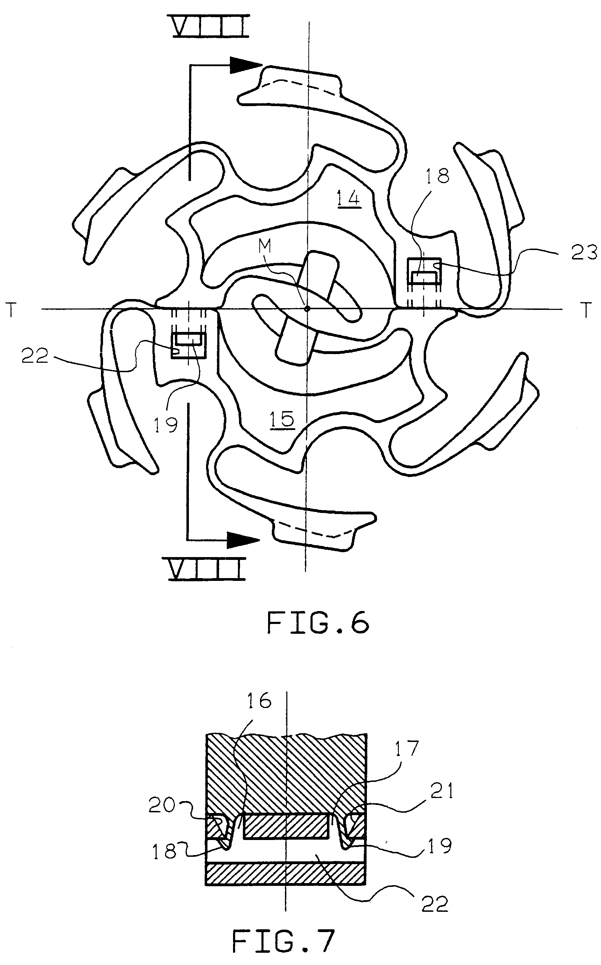

Die Fign. 4 und 5 zeigen die Feder 11 im Eingriff mit der Nut 10, in vergrößerter Darstellung. Dabei weist die Nut 10 eine Hinterschneidung und die zur Erleichterung des Einrastens geschlitzte Feder 11 eine Einschnürung derart auf, daß beide Teile beim Schließen der Halterung miteinander verrastbar sind. Die Nut 10 ist mit einer inneren Querfeder 12 versehen, die in eine entsprechende Nut 13 der gegenüberliegenden Halbscheibe eingreift. Ebenso greift gemäß Fig. 4 eine Feder 12 der oberen Halbscheibe 2 in eine Nut 13 der unteren Halbscheibe 3 ein. Zum Schließen werden die Halbscheiben so gegeneinandergedrückt, daß die Federn 11 in die Nuten 10 einrasten. Dabei ist darauf zu achten, daß auch die Querfedern in die betreffenden Nuten eingreifen. Durch die Nuten 13 und die Federn 12 wird sichergestellt, daß sich die beiden Halbscheiben 2,3 nicht gegeneinander verschieben.

Mittels dieser Halterung 1 können nun die elektrischen Leitungen innerhalb der Verlegungsroute mit wesentlich geringerem Platzbedarf angeordnet werden. Dies wird aufgrund der teilbaren Halterung 1 dadurch erreicht, daß die vorgenannte Erregerleitung jetzt gleichsam im Kern der Energieleitung angeordnet wird. Aus zwei Störungen abstrahlenden Leitungen ist damit praktisch eine geworden. Dies eröffnet die Möglichkeit, die störempfindlichen Leitungen platzsparender zu verlegen. Hierzu werden die Halbscheiben 2,3 so an die Erregerleitung herangeführt, daß diese von den beiden Schalen 6 eingeschlossen wird. Dann wird die Halterung geschlossen. In diesem Zustand liegen die Schalen 6 mit einer Vorspannung an der Erregerleitung an, so daß die Erregerleitung bereits jetzt in der Mitte Halterung fixiert ist.

Sind alle Halterungen in den vorgegebenen Abständen auf die Erregerleitung aufgesetzt, so werden die einzelnen Kabel der Energieleitung in die Randausnehmungen der Halterungen eingesetzt. Dabei werden die Kabel jeweils zwischen einer Randausnehmung 4 und der betreffenden Lasche 5 eingeklemmt. Zur Befestigung der einzelnen Halterungen an der Rumpfstruktur werden diese in Aufnahmen der üblichen an der Struktur montierten Traversen eingesetzt und jeweils mittels eines Spannbandes zunächst lose gesichert. Vor dem endgültigen Festziehen dieser Spannbänder wird zunächst die Erregerleitung in den Schalen 6 ausgerichtet und je Halterung 1 mit einem um die Schalen 6 herumgelegten Spannband fixiert. Durch die Zungen 7 wird das Spannband axial gesichert. Nach der Montage der Erregerleitung werden die einzelnen Kabel der Energieleitung ausgerichtet und durch Festziehen der Spannbänder endgültig fixiert. Infolge der Wülste 8 und 9 sind auch die Halterungen 1 innerhalb ihrer Aufnahmen axial gesichert. Damit sind die Energieleitung und die Erregerleitung montiert. Außer den oben genannten Vorteilen ist hierbei weiterhin vorteilhaft, daß die bisherigen Befestigungsmittel für die Erregerleitung entfallen.

Die Fign. 6 und 7 zeigen anhand der Halbscheiben 14 und 15 eine Ausgestaltung der Erfindung, wobei die Rastverbindung zwischen beiden Teilen darin besteht, daß jede der Halbscheiben 14 und 15 zwei Öffnungen 16 und 17 sowie zwei Haken 18 und 19 mit einem biegeelastischen Bereich aufweist, wobei sich die Öffnungen 16, 17 und die Haken 18,19 mit gleichem Abstand zur Mitte M in der Teilungsebene T gegenüberliegen. Jede Öffnung 16,17 weist eine innere Anlaufschräge 20,21 auf und mündet in einen Kanal 22. Dabei bildet die Kanalwandung mit der jeweiligen Anlaufschräge 20,21 eine Rastkante. Um beide Halbscheiben 14,15 miteinander zu verbinden, werden diese so zusammengefügt, daß die Haken 18, 19 der Halbscheibe 14 in die Öffnungen 16,17 der Halbscheibe 15 eingeführt werden und umgekehrt. Dabei gleiten die Haken 18,19 zunächst über die Anlaufschrägen 20,21 und springen dann hinter die Rastkanten, so daß die Rastverbindung hergestellt ist. Diese Verbindung kann bei Bedarf dadurch wieder gelöst werden, daß ein geeignetes Werkzeug zum Lösen der Haken 18,19 in den Kanal 22 eingeführt wird.

Die Erfindung ist nicht auf die dargestellten und beschriebenen Beispielausführungen beschränkt. Sie erstreckt sich vielmehr auf alle Ausgestaltungen, die im Rahmen der Ansprüche denkbar sind.

## Patentansprüche

1. Halterung für eine aus mehreren Einzelkabeln bestehende elektrische Energieleitung in einem Flugzeug, wobei die Halterung als eine mit Randausnehmungen versehene Scheibe aus Kunststoff ausgebildet ist und die Randausnehmungen jeweils durch in Umfangsrichtung verlaufende Laschen derart abgedeckt sind, daß sie die Leitungen durch eine Vorspannung festhalten, dadurch **gekennzeichnet**, daß die Scheibe (1) diametral in zwei durch eine Rastverbindung miteinander verbindbare gleiche Hälften (2,3) geteilt ist und jede Hälfte (2,3) nahe dem Mittelpunkt (M) der Scheibe eine bogenförmige Schale (6) aufweist, die aus einer Scheibenebene (E) axial herausragt, an deren der Scheibenebene (E) abgewandtem Rand eine radial nach außen zeigende Zunge (7) angeordnet ist.

2. Halterung nach Anspruch 1, dadurch **gekennzeichnet**, daß die Rastverbindung je Halbscheibe (2,3) im wesentlichen aus einer Nut (10) und einer Feder (11) besteht, die sich mit gleichem Abstand zur Mitte M in der Teilungsebene (T) gegenüberliegen.

3. Halterung nach Anspruch 1, dadurch **gekennzeichnet**, daß die Rastverbindung je Halbscheibe (14) und 15 im wesentlichen aus zwei Öffnungen (16,17) sowie zwei Haken (18,19) mit einem biegeelastischen Bereich besteht, wobei sich die Öffnungen (16,17) und die Haken (18,19) mit gleichem Abstand zur Mitte M in der Teilungsebene (T) gegenüberliegen.

4. Halterung nach einem der Ansprüche 1 bis 3, dadurch **gekennzeichnet**, daß die Halbscheiben (14,15) aus einem thermoplastischen Kunststoff hergestellt sind.

## Claims

1. Holder for an electrical power line consisting of a plurality of single cables in an aircraft, the holder being formed as a plastic disc provided with edge recesses and the latter each being covered by flaps extending in the circumferential direction such that they retain the lines through preloading, characterised in that the disc (1) is diametrically divided into two equal halves (2, 3), which can be connected together by a snap-in connection, and each half (2, 3) comprises near the central point (M) of the disc a curved shell (6), which projects axially out of a disc plane (E) and at whose edge which is distant from the disc plane (E) a tongue (7), which points radially outwards, is disposed.

2. Holder according to claim 1, characterised in that the snap-in connection consists essentially of a slot (10) and a key (11) for each half-disc (2, 3), which slot and key are disposed opposite one another at an equal distance from the centre M in the plane of division (T).

3. Holder according to claim 1, characterised in that the snap-in connection consists essentially of two openings (16, 17) and two hooks (18, 19) with a flexible area for each half-disc (14) and (15), the openings (16, 17) and the hooks (18, 19) being disposed opposite one another at an equal distance from the centre M in the plane of division (T).

4. Holder according to one of claims 1 to 3, characterised in that the half-discs (14, 15) are produced from a thermoplastic material.

## Revendications

1. Fixation pour une conduite d'énergie électrique, consistant en plusieurs câbles individuels, dans un avion, la fixation étant constituée sous forme d'un disque, pourvu d'évidements sur les bords, en matière plastique et les évidements sur les bords sont recouverts respectivement par des colliers s'étendant dans le sens périphérique, de telle sorte qu'ils maintiennent les conduites par une précontrainte, fixation caractérisée en ce que le disque (1) est divisé diamétralement en deux moitiés (2,3) identiques pouvant être reliées l'une avec l'autre par une liaison à encliquetage et chaque moitié (2, 3) présente à proximité du centre (M) du disque une coquille (6) en forme d'arc, qui fait saillie à partir d'un plan de disque (E), une languette (7) dirigée radialement vers l'extérieur étant disposée sur le bord situé à l'opposé du plan de disque (E).

2. Fixation selon la revendication 1, caractérisée en ce que la liaison d'encliquetage pour chaque demi-disque (2, 3) consiste essentiellement en une rainure (10) et un ressort (11), qui se font vis-à-vis à la même distance par rapport au milieu M dans le plan de séparation (T).

3. Fixation selon la revendication 1, caractérisée en ce que la liaison d'encliquetage pour chaque demi-disque (14) et (15) consiste essentiellement en deux ouvertures (16, 17) ainsi que deux crochets (18, 19) avec une zone flexible élastiquement, les ouvertures (16, 17) et les crochets (18, 19) se faisant vis-à-vis à la même distance par rapport au milieu M dans le plan de partage (T).

4. Fixation selon l'une des revendications 1 à 3, caractérisée en ce que les demi-disques (14, 15) sont réalisés en une matière plastique thermo-plastique.
